# EUROPEAN PATENT APPLICATION

(11) **EP 1 738 888 A2**
(43) Date of publication of application: **03.01.2007**
(21) Application number: 06011366.9
(22) Date of filing: 01.06.2006
(51) Int. Cl.: B29C 44/30, B29C 44/54

(54) **Method and machine for forming a continuous web of a porous thermoplastic**

(30) Priority: 01.06.2005 SE 0512463
(71) Applicant: Korpela, Heikki, 5340 AT OSS (NL)
(72) Inventor: Korpela, Heikki, 5340 AT OSS (NL)
(74) Representative: Ström, Tore

(57) **Abstract**

Method and machine for forming a continuous web of a porous thermoplastic from granules of the thermoplastic containing an expanding agent, wherein the granulated material is supplied to an inlet end of an elongate moving passage (20). The material is carried through a heating zone (28) in the passage in which a heating fluid is supplied for heating the granulated material under expansion and sintering thereof to form a homogenous body of the material. The material is carried through an evacuation zone (27) in the passage before passing through the heating zone and through a vacuum zone (29) in the passage after having passed through the heating zone for stabilization of the material by reduction of the expansion pressure of the material, heating fluid being sucked from the heating zone to the evacuation vacuum zone, and the material finally is cooled under continued stabilisation thereof.

## Description

The present invention relates to a method for forming a continuous web of a porous thermoplastic from granules of the thermoplastic containing a blowing agent. Preferably, the thermoplastic is pentane expandable polystyrene (EPS) or water expandable polystyrene (WEPS).

The method comprises the steps of supplying the granulated material air borne by pressurized air to an inlet end of an elongate passage having open ends and moving in the longitudinal direction thereof, carrying said material through a heating zone in the passage in which a heating fluid is supplied for heating the granulated material under expansion and sintering thereof to form a homogenous body of the material.

The invention also relates to a machine for practising the method comprising an elongate passage having open ends, which is defined between opposite runs of two pervious endless belts each of which is guided for movement in an endless path, and side walls extending along the runs, means for supplying granules to one end of the passage, and compartments extending along the passage above and below said runs, respectively, and communicating with the passage through the pervious endless belts.

Method and machine of this kind are disclosed in SE 171 095 C wherein the endless belts defining the passage comprise perforated steel belts.

### Brief Summary of the Invention

The purpose of the invention is to improve the efficiency in manufacturing a continuous web of a porous thermoplastic, particularly pentane expandable polystyrene (EPS) and water expandable polystyrene (WEPS), while maintaining a thickness tolerance of the web which is substantially lower than that achieved so far, and an improved quality illustrated by
compressive stress 10 % up to 400 Kpa
bending strength 600 Kpa
water absorption below 1 volume-%.

For achievement of the purpose of the invention the method is characterized in that the material is carried through an evacuation zone and then through a evacuation zone in the passage before passing through the heating zone for sucking heating fluid from the heating zone to the evacuation zone through the material in the passage, and is then carried through a vacuum zone in the passage after having passed through the heating zone, for stabilization of the material by reduction of the expansion pressure of the material, and that the material finally is cooled under continued stabilisation thereof.

The improvement of the efficiency is achieved by the possibility of imparting to the moving passage and thus to the web of porous thermoplastic an increased speed and by the possibility of reducing the amount of heating fluid that is required for expansion and sintering of the plastic material.

The machine for practising the method is characterized in that compartments define sections sealed against each other and including from said one end as seen in the moving direction of the runs an evacuation section adjacent said one end, a heating section, and a vacuum section.

Further features of the method and the machine of the invention are defined in the dependent claims.

### Brief Description of the Drawings

An illustrative embodiment of the invention will be described below with reference to the accompanying drawings in which
FIG 1 is a side view of the machine,
FIG 2 is an enlarged transverse cross sectional view of the machine,
FIG 3 is a fragmentary plan view of a grate forming part of an endless belt,
FIG 4 is a side view of the grate shown in Fig 3,
FIG 5 is a fragmentary end view of the grate,
FIG 6 is a side view of the grate and a chain link coupled to the grate,
Fig 7 is a fragmentary enlarged side view of a chain guiding device
FIG 8 is a diagrammatic view of compartments for evacuation, for creating vacuum, and for supplying heating fluid, and
FIG 9 is a cross sectional view of a sealing device.

### Detailed Description of the Invention

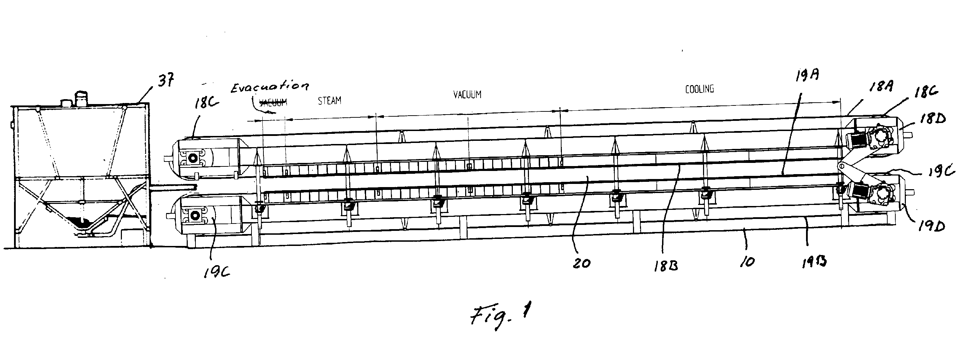

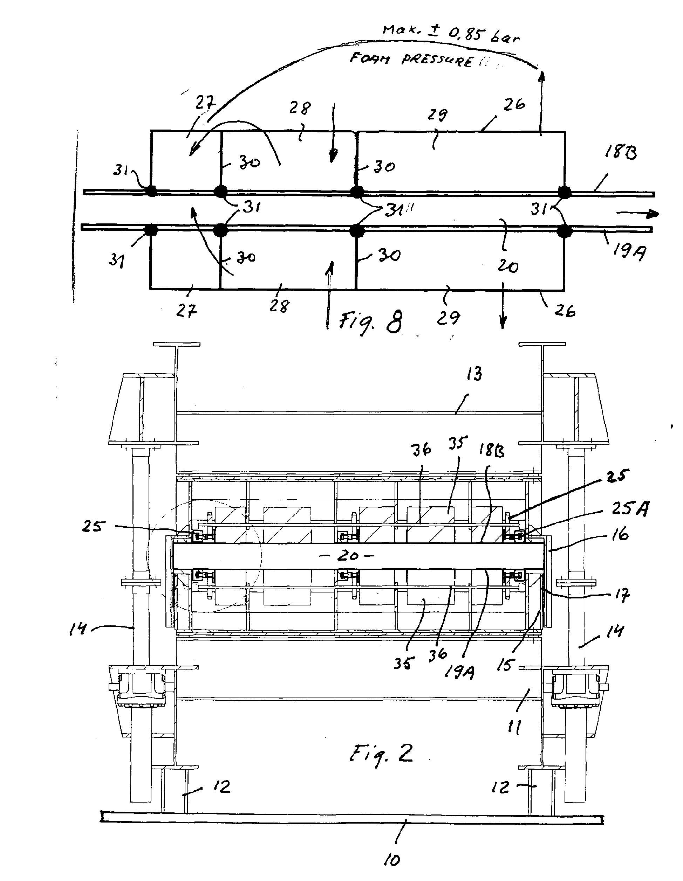

With reference to FIGS 1 and 2 the machine shown in the drawings includes a machine frame resting on a base plate 10 or a floor surface. A stationary part 11 of the frame is supported on the base plate by standards 12 while an adjustable part 13 is supported by hydraulic rams 14 mounted to the stationary part and allowing the adjustable part to be set at a desired level relative to the stationary part in order to determine the thickness of the web of porous thermoplastic material to be produced in the machine. A side wall 15 is fixedly mounted to the lower part of the frame and a side wall 16 is fixedly mounted to the upper part of the frame sealing elements 17 being located between the side walls.

In the upper part of the frame an endless belt with upper and lower runs 18A and 18B, respectively, is mounted for movement in an endless path passing over drums 18C, and in the lower part of the frame an endless belt with upper and lower runs 19A and 19B is mounted for movement in an endless path passing over drums 19C. Between runs 18B and 19A there is a space 20 extending along the runs. The belts are driven by motors or a floor surface 18D and 19D, respectively, so that the lower run 18B in the upper part of the frame moves through the machine from the left end to the right end as seen in FIG 1, and the upper run 19A in the lower part of the frame moves in the same direction as run 18B.

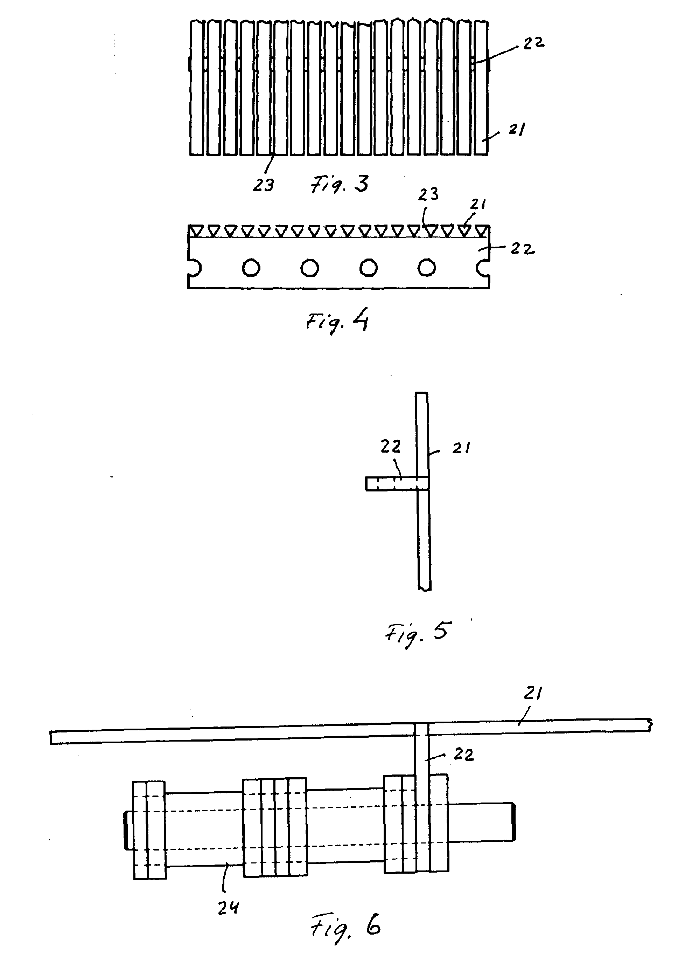

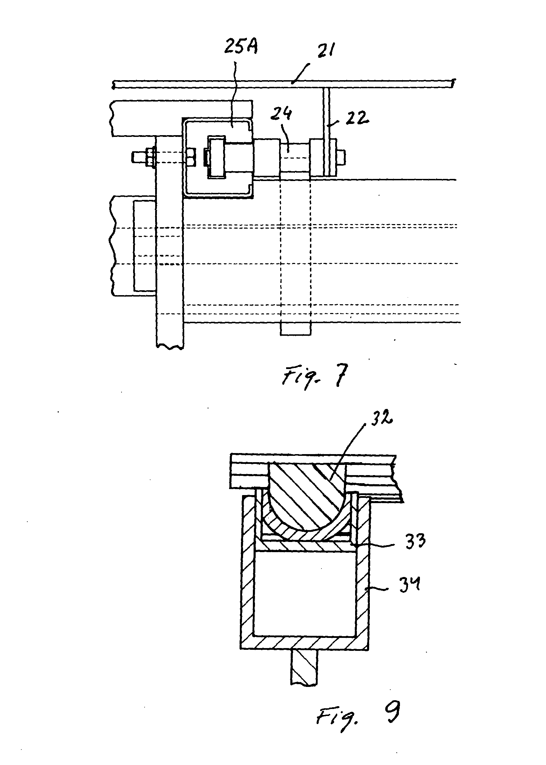

Referring to FIGS 3 to 5 each belt 18A, 18B and 19A, 19B, respectively, comprises a number of elements including each several ribs 21 which are fixedly secured to a cross bar 22 (or several parallel cross bars) with interstices 23 between adjacent ribs, having preferably a width of the order of about 120 µm (about 100 to 140 µm. Ribs 21 together with the cross bar 22 thus form a pervious grate. The cross bar 22 is mounted to a bolt 24, FIG 7, and the several bolts are coupled to links of an endless drive chain transmission 25, FIG. 2, and are guided in guides 25A fixedly connected with the frame. The endless belts formed by the grates thus define upper and lower slotted boundary surfaces of space 20 which moves from the left end of the machine to the right end of the machine. The left end of the space thus is the inlet end. The passage bounded by the runs is closed at the sides by side walls 16 and 18.

Above the lower run 18B in the upper part of the frame and below the upper run 19A in the lower part of the frame there are mounted boxes 26 which are divided into three compartments 27, 28 and 29 by partitions 30, FIG 8. Passage 20 bound by the grates extends between the boxes, and seals 31 are provided which engage the runs of the endless belts over the entire width thereof in order to seal between the compartments and at the end walls of the boxes.

A sealing device is disclosed in FIG 9. It comprises an elastic seal body 32 which is mounted in a piston 33 displaceable in a cylinder 34 to which a pressure fluid can be supplied in order to press the seal body against the grates of the endless belts passing along the boxes. Means are provided for creating in compartments 27 and 29 a negative pressure and for supplying to compartment 28 a heating fluid such as steam or hot air. Support rolls 35 are mounted on shafts 36 and engage the surfaces of the grate elements which face away from space 20.

When the machine described is used for practising the method of the invention the granulated material is supplied to the inlet or left end, FIG 1, of the passage 20 from a silo 37, Fig. 1, the material preferably being received by a rotary vane feeder from which the material is blown under pressure by means of pressurised air into the inlet in order to thoroughly fill the inlet. The carrying air is evacuated by means of a suction fan or the like at the inlet in order to increase the fill factor. A negative pressure is maintained in compartment 27 and a heating fluid such as steam or hot air is supplied to compartment 28 at a pressure of at least 0,1-0,6 bar. When space 20 moves to the right as seen in FIG 1 suction of heating fluid into compartment 27 through the granulated material therein ("cross steaming") is initiated. By heating of the granulated material the granules will expand and sinter together in order to form a homogeneous body which seals against back expansion of the expanding material towards the inlet of passage 20. In compartment 29 a vacuum of -0,1 to -0,8 bar is maintained for relieving the foam pressure. When the material passes compartment 29 the vacuum therein causes a stabilisation of the material and accelerates elimination of the foam pressure from the homogeneous body moving through the passage. When the material has passed compartment 29 further stabilisation of the material is effected by supplying cooling air through the grates bounding passage 20.

The thickness of the web of porous plastic material manufactured as described by means of the machine described can be adjusted by adjustment of the level of part 13 of the frame in relation to part 11 of the frame by means of rams 14.

## Claims

1. A method for forming a continuous web of a porous thermoplastic from granules of the thermoplastic containing a blowing agent, comprising the steps of supplying the granulated material air borne by pressurized air to an inlet end of an elongate passage having open ends and moving in the longitudinal direction thereof, carrying said material through a heating zone in the passage in which a heating fluid is supplied for heating the granulated material under expansion and sintering thereof to form a homogenous body of the material, **characterized in that** the material is carried through an evacuation zone in the passage before passing through the heating zone for sucking heating fluid from the heating zone to the evacuation zone through the material in the passage, and is then carried through a vacuum zone in the passage after having passed through the heating zone for stabilization of the material by reduction of the expansion pressure of the material, and that the material finally is cooled under continued stabilisation thereof.

2. The method of claim 1 wherein the web is formed of a pentane expandable polystyrene (EPS).

3. The method of claim 1 wherein the web is formed of water expandable polystyrene (WEPS).

4. The method of any of claims 1 to 3 wherein the heating fluid is supplied to the passage (20) through the pervious belts.

5. The method of any of claims 1 to 4 wherein the carrying air is evacuated at the inlet in order to increase the fill factor.

6. A machine for practising the method of any of claims 1 to 5, comprising an elongate passage (20) having open ends, which is defined between opposite runs (18B, 19A) of two pervious endless belts each of which is guided for movement in an endless path, and side walls (16, 17) extending along the runs, means for supplying granules to one end of the passage, compartments (27, 28, 29) extending along the passage above and below said runs, respectively, and communicating with the passage through the pervious endless belts, **characterized in that** the compartments define sections sealed against each other and including from said one end as seen in the moving direction of the runs an evacuation section (27) adjacent said one end, a heating section (28), and a vacuum section (29).

7. The machine of claim 6 wherein each endless belt comprises a number of grate elements interconnected to form a continuous pervious belt.

8. The machine of claim 7 wherein the grate elements are connected with an endless chain transmisson guided for movement in an endless path.

9. The machine of claim 7 or 8 wherein each grate comprises a number of parallel bars interconnected to define interstices therebetween.

10. The machine of claim 1 wherein the width of the interstices is of the order of 100 to 140 µm, preferably of the order of about 120 µm.
